Europäisches Patentamt

European Patent Office

Office européen des brevets

(19)

(11) **EP 0 908 218 B1**

(12) **FASCICULE DE BREVET EUROPEEN**

(45) Date de publication et mention
de la délivrance du brevet:
**20.12.2000 Bulletin 2000/51**

(51) Int Cl.⁷: **B01D 53/047**

(21) Numéro de dépôt: **98402936.3**

(22) Date de dépôt: **25.11.1998**

(54) **Procédé PSA mettant en oeuvre un adsorbant à propriétés de capacité et/ou de sélectivité hétérogènes**

PSA Verfahren unter Verwendung eines Adsorptionmittels mit heterogener Kapazität und/oder Selektivität

PSA process using an adsorbent with heterogeneous capacity and/or selectivity

(84) Etats contractants désignés:
**CH DE ES FR GB IT LI**

(30) Priorité: **01.12.1997 FR 9715090**

(43) Date de publication de la demande:
**14.04.1999 Bulletin 1999/15**

(73) Titulaire: **L'AIR LIQUIDE, SOCIETE ANONYME POUR**
**L'ETUDE ET L'EXPLOITATION DES PROCEDES**
**GEORGES CLAUDE**
**75007 Paris (FR)**

(72) Inventeurs:
 • **Rouge, Dominique**
  **92240 Malakoff (FR)**
 • **Labasque, Jacques**
  **78000 Versailles (FR)**
 • **Moreau, Serge**
  **78140 Velizy-Villacoublay (FR)**
 • **Montfort, Christophe**
  **78530 Buc (FR)**

(74) Mandataire: **Le Moenner, Gabriel et al**
 **Societé l'Air Liquide**
 **Service Brevets et Marques**
 **75, Quai d'Orsay**
 **75321 Paris Cédex 07 (FR)**

(56) Documents cités:
 **EP-A- 0 374 631**          **EP-A- 0 589 406**
 **US-A- 5 529 610**

Remarques:
Le dossier contient des informations techniques présentées postérieurement au dépôt de la demande et ne figurant pas dans le présent fascicule.

**Description**

L'invention concerne l'utilisation d'un adsorbant à propriétés d'adsorption hétérogènes dans un procédé de type PSA, et plus particulièrement de type VSA, de séparation d'un flux gazeux, en particulier d'un flux gazeux contenant essentiellement de l'oxygène et de l'azote, tel l'air.

Les gaz de l'air présentent un grand intérêt industriel car trouvant de multiples applications dans des domaines techniques très variés : fabrication de l'acier, du verre ou du papier, médecine, soudage de métaux, combustion ou dépollution, par exemples.

Une des techniques actuellement utilisées pour produire ces gaz est la technique dite "PSA" (pour Pressure Swing Adsorption), laquelle recouvre non seulement les procédés PSA proprement-dits, mais aussi les procédés analogues, tels les procédés VSA (Vacuum Swing Adsorption) ou MPSA (Mixed Pressure Swing Adsorption). Selon cette technique PSA, lorsque le mélange gazeux à séparer est l'air et que le composant à récupérer est l'oxygène, ledit oxygène est séparé dudit mélange gazeux grâce à une adsorption préférentielle d'au moins l'azote sur un matériau adsorbant préférentiellement l'azote, ladite adsorption étant effectuée par variation de la pression appliquée dans la zone de séparation contenant ledit matériau adsorbant. L'oxygène ne s'adsorbant pas ou peu est récupéré en sortie de ladite zone de séparation; celui-ci à une pureté, en général, supérieure à 90 %, voire à 93% ou plus.

Plus généralement, un procédé PSA pour la séparation non-cryogénique d'un mélange gazeux comprenant un premier composé s'adsorbant préférentiellement sur un matériau adsorbant et un deuxième composé s'adsorbant moins préférentiellement sur ledit matériau adsorbant que ledit premier composé, en vue de la production dudit deuxième composé, comprend de manière cyclique :

- une étape d'adsorption préférentielle d'au moins ledit premier composé sur ledit matériau adsorbant, à une pression d'adsorption dite "pression haute", avec récupération d'au moins une partie du deuxième composé ainsi produit;
- une étape de désorption du premier composé ainsi piégé par l'adsorbant, à une pression de désorption inférieure à la pression d'adsorption, dite "pression basse";
- une étape de repressurisation de la zone de séparation comprenant l'adsorbant, par passage progressif de ladite pression basse à ladite pression haute.

Cependant, il est connu que l'efficacité de séparation d'un mélange gazeux, tel l'air, dépend de nombreux paramètres notamment la pression haute, la pression basse, le type de matériau adsorbant utilisé et l'affinité de celui-ci pour les composés à séparer, la composition du mélange gazeux à séparer, la température d'adsorption du mélange à séparer, la taille et la forme des particules d'adsorbant, la composition de ces particules et le gradient de température s'établissant à l'intérieur du lit d'adsorbant.

A ce jour, bien qu'aucune loi de comportement générale n'ait pu être déterminée, sachant qu'il est très difficile de relier ces différents paramètres entre eux, il est également connu que la nature et les propriétés de l'adsorbant jouent un rôle primordial dans l'efficacité globale des procédés de type PSA.

Actuellement, les zéolites, notamment de type A, X, Y ou LSX (Low Silica X), sont les adsorbants les plus communément mis en oeuvre dans les procédés PSA. Les particules zéolitiques contiennent habituellement des cations mono, di et/ou trivalents, par exemples des cations de métaux alcalins, alcalino-terreux ou de lanthanides, incorporés lors de la synthèse des particules de zéolite et/ou insérés subséquemment par une technique d'échange d'ions.

L'échange d'ions est généralement effectué par mise en contact des particules de zéolite non-échangées ou zéolite brute avec une solution d'un ou plusieurs sels métalliques comprenant le ou les cations à incorporer dans la structure zéolitique et récupération subséquente des particules de zéolite échangée, c'est-à-dire de zéolite contenant une quantité donnée de cations métalliques. La proportion de cations métalliques introduits dans la structure zéolitique est appelée le taux d'échange.

Classiquement, il est recommandé d'essayer d'obtenir un adsorbant parfaitement homogène, c'est-à-dire ne présentant pas ou alors le moins possible de variations non seulement de taux d'échange, mais aussi de capacité et/ou de sélectivité; la capacité et la sélectivité de l'adsorbant étant des paramètres connus de l'homme de l'art et définis dans de nombreux documents, notamment US-A-4481018, EP-A-589406 ou EP-A-598391.

Cette notion d'adsorbant homogène apparaît d'ailleurs clairement dans EP-A-589406 et EP-A-598391, étant donné que ceux-ci enseignent l'utilisation dans un procédé PSA d'un adsorbant ayant une capacité et une sélectivité données et choisies dans une certaine plage de valeurs. En d'autres termes, ces documents ni ne décrivent, ni ne prennent en compte l'existence de possibles fluctuations de capacité et/ou de sélectivité de l'adsorbant, c'est-à-dire une hétérogénéité de celui-ci quant à l'un et/ou l'autre ces deux paramètres.

Il s'ensuit qu'actuellement, les adsorbants réputés être de bons adsorbants pour la séparation des gaz, notamment pour la séparation des gaz de l'air par procédé de type PSA, sont ceux dont la capacité et/ou la sélectivité sont le plus homogène possible.

Plus généralement, aucun document de l'art antérieur n'a montré ou souligné, jusqu'à présent, l'importance que peut revêtir le degré d'hétérogénéité de capacité et/ou de sélectivité d'un adsorbant donné, et l'impact de ce degré d'hétérogénéité notamment sur les performances d'un procédé PSA mettant en oeuvre un tel adsorbant hétérogène.

Par ailleurs, les adsorbants les plus utilisés dans les procédés de séparation de gaz, en particulier de l'air, sont des zéolites fortement échangées, en général à plus de 80%, avec cations de métaux très coûteux, tels notamment des cations lithium. A ce titre, on peut citer les documents US-A-5268023 et US-A-5152813.

Il apparaît donc immédiatement que le fait de ne pouvoir utiliser pour séparer les mélanges gazeux que des zéolites, notamment fortement échangées, ayant une capacité d'adsorption et une sélectivité d'adsorption homogènes implique d'effectuer un contrôle de qualité rigoureux et une sélection sévère des adsorbants après leur fabrication. Il s'ensuit alors un taux de déchet important et une augmentation inévitable et considérable des coûts globaux de fabrication et des coûts du procédé de séparation et des gaz ainsi produits.

Le but de la présente invention est donc de proposer un procédé de séparation de gaz utilisant un adsorbant à capacité et/ou sélectivité hétérogènes dont les performances restent acceptables du point de vue industriel, malgré l'hétérogénéité des propriétés d'adsorption des différentes particules d'adsorbant.

Ainsi, à performances équivalentes, le procédé utilisant un adsorbant hétérogène selon l'invention conduit à un coût nettement moindre qu'un procédé classique mettant en oeuvre un adsorbant homogène, étant donné qu'il permet une flexibilité plus importante au niveau des propriétés d'adsorption de l'adsorbant. Dans le cadre de la présente invention, on entend par adsorbant, un produit de type unique, par exemple une zéolite donnée, telle notamment une zéolite de type A ou une zéolite de type X.

La présente invention concerne alors un procédé PSA de séparation d'un flux gazeux contenant au moins un premier composé s'adsorbant préférentiellement sur au moins un adsorbant et au moins un deuxième composé s'adsorbant moins préférentiellement sur au moins ledit adsorbant que ledit premier composé, caractérisé en ce que l'adsorbant est un adsorbant hétérogène comportant des particules d'un produit adsorbant de type unique ayant une distribution de capacité d'adsorption de l'azote avec un rapport ($\sigma_c/\mu_c$) compris entre environ 0.02 et 0,10, et/ou ayant une distribution de sélectivité d'adsorption pour l'azote par rapport à l'oxygène avec un rapport ($\sigma_s/\mu_s$) compris entre environ 0.02 et 0,20, où le paramètre $\sigma_c$ désigne l'écart-type de la distribution de capacité d'adsorption et le paramètre $\mu_c$ la moyenne de ladite distribution, et le paramètre $\sigma_s$ désigne l'écart-type de la distribution de sélectivité d'adsorption et le paramètre $\mu_s$ la moyenne de ladite distribution.

En pratique, les paramètres $\sigma_c$, $\sigma_s$, $\mu_c$ et $\mu_s$ sont estimés par une méthode statistique classique, par exemple la méthode du maximum de vraisemblance ou la méthode d'estimation par intervalles, sur un nombre suffisant d'échantillons prélevés au hasard, par exemple au moins 100 échantillons et, de préférence, au moins 50 échantillons, de particules d'adsorbant en quantité suffisante pour pouvoir mesurer lesdites capacités et sélectivités de ces différents échantillons.

Selon le cas, le procédé de l'invention peut inclure l'une ou plusieurs des caractéristiques suivantes :

- le rapport ($\sigma_c/\mu_c$) est compris entre environ 0.02 et 0,08, de préférence entre environ 0.03 et 0.08
- le rapport ($\sigma_s/\mu_s$) est compris entre environ 0.02 et 0,18, de préférence entre environ 0.03 et 0.18
- il est choisi parmi les zéolites échangées ou non-échangées.
- il est choisi parmi les zéolites de type X, Y, A, ZSM-3, ZSM-5 mordénite, faujasite ou clinoptilolite.
- il contient des cations choisis dans le groupe formé par les cations lithium, calcium, zinc, cuivre, manganèse, magnésium, nickel, potassium, strontium ou de tout métal alcalin ou alcalino-terreux, et leurs mélanges.
- il contient au moins 50% de cations lithium et/ou au moins 10% de cations calcium et/ou au moins 5% de cations zinc.
- il contient au moins 85% de cations lithium, de préférence au moins 90 % de cations lithium.
- il contient au moins 80% de cations calcium, de préférence au moins 85 % de cations calcium.
- il présente un rapport Si/Al de 1 à 1.25 et, de préférence, environ 1, de préférence une zéolite LSX.
- le flux gazeux à séparer comprend de l'oxygène et de l'azote, de préférence le flux gazeux est de l'air; l'air étant, dans le cadre de la présente invention, l'air contenu à l'intérieur d'un batiment ou d'une enceinte chauffée ou non, ou l'air extérieur, c'est-à-dire dans les conditions atmosphériques, pris tel quel ou éventuellement prétraité,
- le premier composé est l'azote et le deuxième composé est l'oxygène; et on produit un flux gazeux riche en oxygène, c'est-à-dire comprenant, en général, au moins 90% d'oxygène.
- il est de type VSA ,
- la pression haute d'adsorption est comprise entre $10^5$ Pa et $10^7$ Pa, de préférence, de l'ordre de $10^5$ Pa à $10^6$ Pa, et/ou la pression basse de désorption est comprise entre $10^4$ Pa et $10^6$ Pa, de préférence, de l'ordre de $10^4$ Pa à $10^5$ Pa,
- la température d'alimentation est comprise entre 10°C et 80°C, de préférence entre 25°C et 60°C.

En outre, il faut noter que la présente invention s'applique aussi à chacun des adsorbeurs d'un procédé mettant en oeuvre plusieurs adsorbants, par exemple un procédé multilits.

L'invention va maintenant être décrite plus en détail à l'aide d'exemples de simulation donnés à titre illustratif, mais non limitatif.

Habituellement, lorsqu'on procède au dimensionnement d'une unité de séparation de gaz, telle en particulier une unité de type VSA de séparation des gaz de l'air, il est d'usage de considérer l'homogénéité des propriétés d'adsorption du tamis moléculaire devant être mis en oeuvre, c'est-à-dire de l'adsorbant utilisé. En d'autres termes, le dimensionnement des unités PSA se fait communément en considérant que l'adsorbant inséré dans le ou les adsorbeurs est totalement homogène, en particulier en ce qui concerne ses caractéristiques de capacité d'adsorption de l'azote et de sélectivité d'adsorption de l'azote par rapport à l'oxygène.

Or, comme le souligne la présente invention, les inventeurs ont constaté que les tamis industriels ou adsorbants industriels, de par notamment les aléas de production ou de matières premières utilisées pour leur synthèse, peuvent présenter une dispersion de propriétés plus ou moins importante ayant plus ou moins d'impact sur les performances globales du procédé de séparation.

Une étude de cette dispersion des propriétés de l'adsorbant, c'est-à-dire de son hétérogénéité, et de l'impact de cette hétérogénéité sur les performances d'un procédé PSA de séparation d'air a été réalisée par simulation, en prenant en compte les déséquilibres de lit à lit dans leur ensemble, correspondant à un déséquilibre originel entre adsorbeurs susceptible d'être apparu dès le remplissage des adsorbeurs du fait des disparités de propriétés des particules d'adsorbant issues directement de la fabrication et, en général, de lots de fabrication différents, chaque adsorbeur étant rempli d'un lit unique de l'adsorbant considéré.

Pour simuler les disparités d'homogénéité susceptibles d'exister dans les adsorbeurs d'une unité PSA, telle une unité VSA, les simulations données ci-après ont été réalisées en prenant comme hypothèse que les adsorbeurs sont remplis avec des particules d'adsorbant ayant des propriétés différentes d'un adsorbeur à l'autre, de manière à créer un déséquilibre entre lesdits adsorbeurs.

Il est à noter que le cas d'un déséquilibre a posteriori, c'est-à-dire causé par une pollution accidentelle de l'adsorbant par exemple, est également abordé.

A des fins de simplification, l'étude consignée ci-après a été réalisée en considérant que le mélange gazeux à séparer est de l'air ambiant, que le premier composé s'adsorbant préférentiellement sur l'adsorbant est l'azote et que le deuxième composé s'adsorbant moins préférentiellement sur l'adsorbant et devant être récupéré est l'oxygène.

Plus précisément, les déséquilibres entre adsorbeurs ont été simulés (mode adiabatique) à l'aide d'un programme de simulation qui repose sur les principes de conservation de la masse, de conservation de l'enthalpie, de conservation de la quantité de mouvement et utilise le modèle de la Linear Driving Force (voir "Principles of adsorption and adsorption processes", John-Wiley & Sons, 1984; D. M. Ruthven, p. 242-243; ou "Pressure Swing Adsorption", VCS Publishers, 1994, p. 58-61) pour l'évaluation de la cinétique des transferts solide-gaz au sein de la masse d'adsorbant. De tels modèles de simulation sont notamment décrits dans Pressure Swing Adsorption, Ruthven, Farooq et Knaebel, VCH Publishers, 1994, pages 172-209; et dans Fluid Flow Through Packed Columns, S. Ergun, Chem. Engr. Prog., 48(2), 89(1952). La résolution des équations peut, quant à elle, être réalisée par exemple au moyen du programme DIVPAG de la Bibliothèque Mathématique IMSL (International Mathematical & Statistical Library) commercialisé par la société Microsoft™; ou du programme ADSIM commercialisé par la société Aspentech™. L'homme du métier est parfaitement en mesure de choisir un programme de simulation adéquat parmi les nombreux programmes disponibles sur le marché et d'y introduire les données précédentes. Si besoin est, il peut également se reporter à l'article de D. G. Hartzog et S. Sircar; Adsorption, 1, 133-151 (1995), Sensitivity of PSA Process Performance to Input Variables, décrivant un programme similaire.

Les paramètres de simulation considérés pour des cycles à deux ou, selon le cas, à trois adsorbeurs sont la capacité d'adsorption de l'azote par l'adsorbant (capacité azote) et la sélectivité d'adsorption de l'adsorbant pour l'azote par rapport à l'oxygène.

Les simulations sont réalisées à machines constantes pour les cycles suivants :

- cycle à deux adsorbeurs (A et B) de 2x40s environ avec pression haute de 1.4 bars et pression basse de 0.4 bars;
- cycle à trois adsorbeurs (A, B et C) de 3x30 s environ avec pression haute de 1.1 bars et pression basse de 0.3 bars.

Outre les performances proprement-dites de l'unité VSA (débit de production, pureté moyenne de l'oxygène produit et énergie spécifique), il importe de maintenir un certain nombre de paramètres dans des bornes acceptables. En particulier, les profils de pression dans les adsorbeurs et éventuellement dans les capacités ne doivent pas atteindre des valeurs risquant de mettre en péril le matériel, notamment les machines (pompe à vide, soufflante, compresseur...). De même, le profil de pureté instantanée du gaz produit ne doit pas présenter de déséquilibre trop marqué, incompatible avec le procédé du client. C'est pourquoi ces paramètres ont également été enregistrés dans les simulations de déséquilibres de propriétés d'adsorbant, de façon à déterminer le niveau de déséquilibre réellement acceptable.

Exemple 1 : Déséquilibre de sélectivité de l'adsorbant

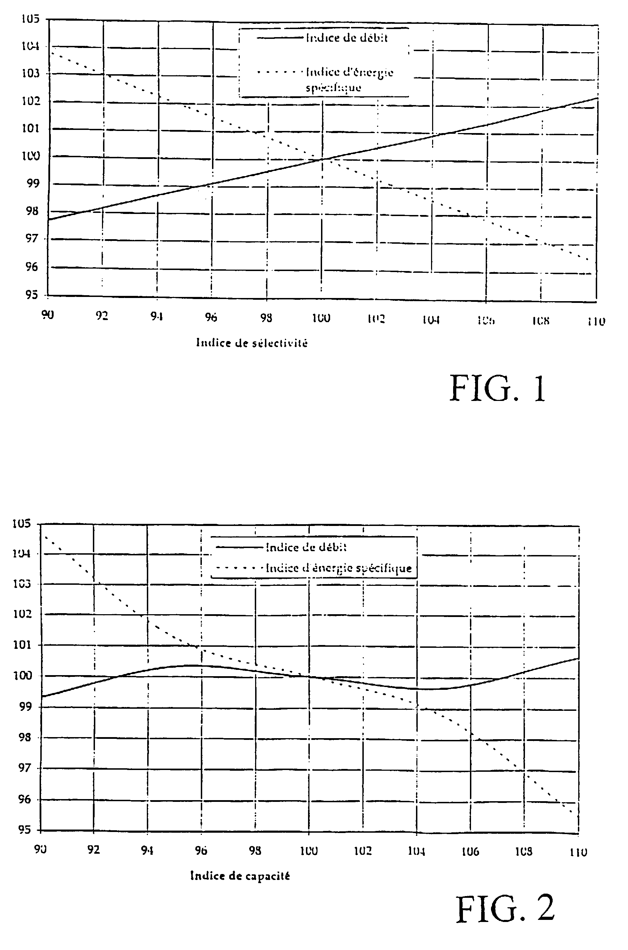

Cet exemple vise à déterminer l'impact d'un déséquilibre de sélectivité de l'adsorbant entre adsorbeurs pour un cycle à 2 adsorbeurs (A et B). Les résultats obtenus sont consignés dans le tableau I ci-après sous forme indicée et sont schématisés sur la figure 1.

Tableau I

| Simulation n° | S1 | S2 | Sref | S3 | S4 |
|---|---|---|---|---|---|
| Sélectivité de l'adsorbeur A | 100 | 100 | 100 | 100 | 100 |
| Sélectivité de l'adsorbeur B | 110 | 105 | 100 | 95 | 90 |
| Débit | 102 | 101 | 100 | 99 | 98 |
| Energie spécifique | 96 | 98 | 100 | 102 | 104 |

Sref est un essai de référence correspondant à une absence de déséquilibre entre adsorbeurs; S1 et S2 reflètent une meilleure sélectivité pour l'azote de l'adsorbant contenu dans l'adsorbeur B (par rapport à celui de l'adsorbeur A et à la référence); et S3 et S4 reflètent à une sélectivité dégradée pour l'azote de l'adsorbant contenu dans l'adsorbeur B.

Le débit est la quantité moyenne d'oxygène produit par heure et l'énergie spécifique correspond à la puissance moyenne consommée par heure divisée par le débit.

En outre, les paramètres critiques pour la sécurité du matériel et de la production ne sont pas affectés :

- déséquilibre de profils de pression dans les adsorbeurs : nul
- déséquilibre de profil de pression de la capacité de production : nul
- déséquilibre de profil de teneur au sein de la capacité de production : nul

Exemple 2 : Déséquilibre de capacité en azote

Cet exemple est analogue à l'exemple 1, et vise à déterminer l'effet d'un déséquilibre de capacité du tamis entre adsorbeurs pour un cycle à 2 adsorbeurs.

Les résultats obtenus sont consignés dans le tableau II ci-après sous forme indicée et sont schématisés sur la figure 2.

Tableau II

| Simulation n° | C1 | C2 | Cref | C3 | C4 |
|---|---|---|---|---|---|
| Capacité en azote de l'adsorbeur A | 100 | 100 | 100 | 100 | 100 |
| Capacité en azote de l'adsorbeur B | 110 | 105 | 100 | 95 | 90 |
| Débit | 101 | 100 | 100 | 100 | 99 |
| Energie spécifique | 96 | 99 | 100 | 101 | 105 |

Sref est un essai de référence correspondant à une absence de déséquilibre entre adsorbeurs; C1 et C2 reflètent une meileure capacité de l'adsorbant contenu dans l'adsorbeur B (par rapport à celui de l'adsorbeur A et à la référence); et C3 et C4 reflètent à une capacité dégradée de l'adsorbant contenu dans l'adsorbeur B.

En outre, les paramètres critiques pour la sécurité du matériel et de la production restent acceptables :

- déséquilibre de profils de pression dans les 2 adsorbeurs : faible
- déséquilibre de profil de pression de la capacité de production : faible
- déséquilibre de profil de teneur dans la capacité de production : nul

Exemple 3 : Déséquilibre de sélectivité

Cet exemple vise à déterminer l'impact d'un déséquilibre de sélectivité du tamis entre adsorbeurs pour un cycle à 3 adsorbeurs (A, B et C).

Tableau III

| Simulation n° | S11 | Sref | S12 | S13 |
|---|---|---|---|---|
| Sélectivité des adsorbeurs A et B | 100 | 100 | 100 | 100 |
| Sélectivité de l'adsorbeur C | 90 | 100 | 105 | 110 |
| Débit | 96 | 100 | 101 | 101 |
| Energie spécifique | 104 | 100 | 99 | 99 |

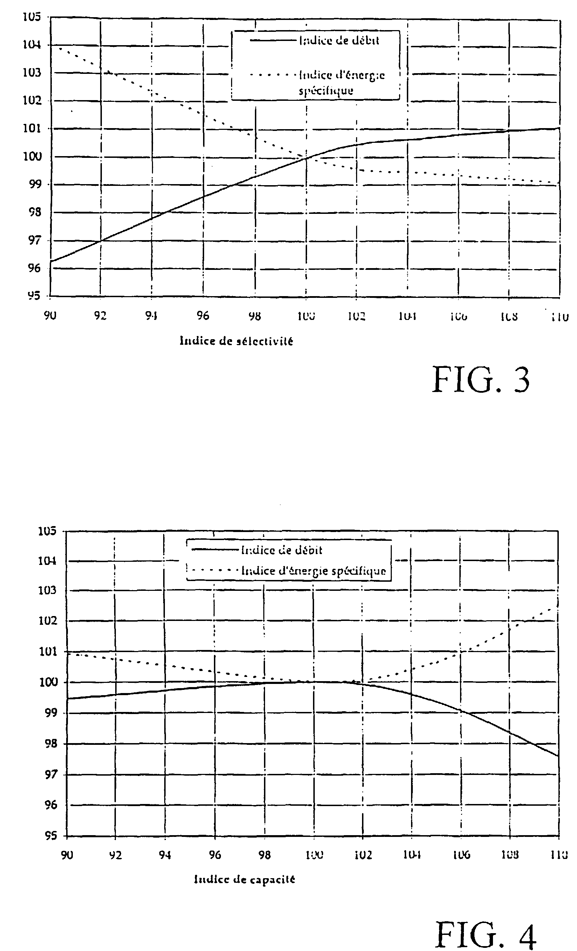

Les données figurant dans le tableau précédent sont schématisées sur la figure 3. En outre, les paramètres critiques présentent les évolutions suivantes:

- déséquilibre de profils de pression dans les adsorbeurs        : faible
- déséquilibre de profil de teneur du gaz de production        : fort

Exemple 4 : Déséquilibre de capacité

Cet exemple vise à déterminer l'effet d'un déséquilibre de capacité en azote du tamis pour un cycle à 3 adsorbeurs (A, B et C).

Tableau IV

| Simulation n° | C11 | Cref | C12 | C13 |
|---|---|---|---|---|
| Capacité en azote des adsorbeurs A et B | 100 | 100 | 100 | 100 |
| Capacité en azote de l'adsorbeur C | 90 | 100 | 105 | 110 |
| Débit | 99 | 100 | 99 | 98 |
| Energie spécifique | 101 | 100 | 101 | 102 |

Les données figurant dans le tableau précédent sont schématisées sur la figure 4.
En outre, les paramètres critiques présentent les évolutions suivantes:

- déséquilibre de profils de pression dans les adsorbeurs        : faible
- déséquilibre de profil de teneur du gaz de production        : fort

Commentaire des exemples

Il ressort des exemples 1 et 2 que, en cycle à 2 adsorbeurs, le débit de production d'oxygène est maintenu sensiblement constant sur une large plage d'hétérogénéité de capacité d'adsorption d'azote, dès lors que la sélectivité d'adsorption est maintenue (Tableau II). Au contraire, il n'en va pas de même de l'énergie spécifique qui est, quant à elle, sujette à des fluctuations non négligeables dès lors que la capacité d'azote varie.
On assiste, par ailleurs, à des variations importantes des performances du procédé, c'est-à-dire du débit de gaz produit et de l'énergie spécifique, en présence d'une différence de sélectivité entre les deux adsorbeurs, même si la capacité d'azote est maintenue sensiblement constante (Tableau I).
Par ailleurs, les déséquilibres des propriétés d'adsorption n'entraînent pas, en cycle à 2 adsorbeurs, de déséquilibre majeur mettant en péril la sécurité du matériel et/ou surtout la qualité, en particulier la pureté, du gaz produit, ici l'oxygène.
Au vu des exemples 3 et 4, il apparaît que, en cycle à 3 adsorbeurs, lorsque l'adsorbeur déséquilibré, à savoir l'adsorbeur C, présente une sélectivité inférieure à sa valeur "de dimensionnement" (valeur Sref du Tableau III) ou, respectivement, une capacité d'adsorption d'azote supérieure à sa valeur "de dimensionnement" (valeur Cref du Tableau IV), il se produit une rapide dégradation de l'énergie spécifique ou, respectivement, du débit de production du procédé à 3 adsorbeurs.
A l'inverse du cycle à 2 adsorbeurs, dans le cycle à 3 adsorbeurs, on assiste à l'apparition d'un fort déséquilibre de pureté du gaz produit lorsque les propriétés de l'adsorbant deviennent trop hétérogènes d'un adsorbeur à l'autre du fait de l'absence de capacité de production. Il est à noter, à ce titre, que ce fort déséquilibre du cycle à 3 adsorbeurs pourrait être atténué au moins partiellement par l'addition d'une capacité tampon à l'unité PSA.

En résumé, ces exemples de simulation permettent de montrer l'impact non négligeable d'une hétérogénéité de capacité et/ou de sélectivité sur les performances du procédé.

De plus, ils fournissent une base pour l'estimation de la valeur maximum admissible de dispersion des propriétés d'adsorption pour un tamis moléculaire industriel avant remplissage du ou des adsorbeurs de l'unité PSA avec l'adsorbant.

Plus précisément, pour rendre compte des fluctuations des propriétés thermodynamiques d'adsorption de particule à particule sur une charge industrielle de tamis moléculaire, c'est-à-dire d'adsorbant, il est nécessaire d'envisager deux cas de distribution, à savoir uniforme et gaussienne, représentativres des distributions extrêmes encadrant les distributions réelles.

Pour chacune de ces distributions, le cas le plus défavorable pour un fonctionnement correct de l'unité PSA industrielle correspond au remplissage sélectif d'un des adsorbeurs par la partie de la charge industrielle ayant les propriétés d'adsorption les plus faibles pour la sélectivité ou, selon le cas, les plus fortes pour la capacité d'adsorption.

Le tableau V ci-après expose, selon la distribution de tamis considérée et la configuration de l'unité industrielle (2 ou 3 adsorbeurs), l'écart entre les moyennes de propriété d'adsorption des différents adsorbeurs. Il faut néanmoins souligner que, dans le cas d'une unité à 3 adsorbeurs, on suppose que le remplissage des deux adsorbeurs ne contenant pas la partie hétérogène d'adsorbant est parfaitement homogène.

Tableau V

| Cycle à n adsorbeurs | n = 2 | n = 3 |
|---|---|---|
| Distribution uniforme | $\sqrt{3}.(\sigma/\mu)$ | $\sqrt{3}.(\sigma/\mu)$ |
| Distribution gaussienne | $1.35 . (\sigma/\mu)$ | $1.40.(\sigma/\mu)$ |

où $\sigma$ et $\mu$ sont, respectivement, les écart-type et moyenne de la distribution de capacité $(\mu_c, \sigma_c)$ ou, le cas échéant, de sélectivité d'adsorption $(\mu_s, \sigma_s)$ sur l'ensemble de la charge industrielle de tamis.

Il s'ensuit que, pour une charge de tamis de distribution de capacité d'adsorption quelconque $(\mu_c, \sigma_c)$, il existe, compte-tenu de ce qui précède et pour une sélectivité homogène entre les deux lits de tamis moléculaire, une condition sur le rapport $(\sigma_c/\mu_c)$ conduisant à un maintien des performances de l'unité PSA au niveau escompté lors de son dimensionnement.

Cette condition sur le rapport $(\sigma_c/\mu_c)$ est déterminée à partir des hypothèses de dimensionnement suivantes pour une unité à deux adsorbeurs (A et B) :

- adsorbeur A : tamis de capacité d'adsorption $\mu_c$
- adsorbeur B : tamis de capacité d'adsorption $\mu_c$
- débit de production : $Q = Q_0$
- énergie spécifique : $ES = ES_0$

Toutefois, ces hypothèses de dimensionnement nécessitent d'être modifiées comme suit :

- adsorbeur A : tamis de capacité d'adsorption $\mu_c.(1-x. (\sigma_c/\mu_c))$
- adsorbeur B : tamis de capacité d'adsorption $\mu_c.(1+x. (\sigma_c/\mu_c))$

(où x dépend du type de distribution du tamis et prend les valeurs données dans le tableau V)

- débit de production : $Q = Q_0 . \alpha_1$
- énergie spécifique : $ES = ES_0 . \alpha_2$

On choisit ensuite la borne ou limite supérieure L du rapport $(\sigma_c/\mu_c)$ telle que, quel que soit le type de distribution (gaussienne ou uniforme) avec $(\sigma_c/\mu_c) \leq L$, les équations suivantes soient vérifiées:

$$\alpha_1 \geq 0.98 \qquad \alpha_2 \leq 1.02$$

Cela correspond, en fait, à une dérive maximale de 2% des performances attendues, c'est-à-dire fixées lors du dimensionnement de l'unité PSA à deux adsorbeurs.

De là, pour maintenir les performances de l'unité PSA (2 adsorbeurs) conformes à celles escomptées lors du dimensionnement (avec marge maximale de 2%), pour une distribution uniforme, le rapport $(\sigma_c/\mu_c)$ doit être inférieur ou égal à 0,05 et, pour une distribution gaussienne, le rapport ($\sigma_c/\mu_c$) doit être inférieur ou égal à 0,07 pour la capacité d'adsorption.

En appliquant le raisonnement précédent à une unité industrielle à trois adsorbeurs, il apparaît que pour maintenir les performances de l'unité conformes à celles du dimensionnement (avec marge de tolérance maximale de 2%), pour une distribution uniforme, le rapport ($\sigma_c/\mu_c$) doit être inférieur ou égal à 0,03 et, pour une distribution gaussienne, le rapport ($\sigma_c/\mu_c$) doit être inférieur ou égal à 0,04 pour la capacité d'adsorption.

En appliquant une approche similaire, on a déterminé que les conditions sur le rapport ($\sigma_s/\mu_s$) de la distribution de sélectivité d'une charge industrielle de tamis permettant d'éviter une dérive maximale de 2 % des performances de l'unité par rapport aux valeurs déterminées lors du dimensionnement de cette unité sont :

- pour un cycle à 2 adsorbeurs et une distribution uniforme : $\sigma_s/\mu_s \leq 0.13$
- pour un cycle à 2 adsorbeurs et une distribution gaussienne : $\sigma_s/\mu_s \leq 0.16$
- pour un cycle à 3 adsorbeurs et une distribution uniforme : $\sigma_s/\mu_s \leq 0.09$
- pour un cycle à 3 adsorbeurs et une distribution uniforme : $\sigma_s/\mu_s \leq 0.11$

Il est à noter que les cycles à 3 adsorbeurs sont plus exigeants que les cycles à 2 adsorbeurs quant au caractère homogène du tamis, c'est-à-dire que l'influence de la capacité ou de la sélectivité sur les performances et sur les paramètres critiques de l'unité est beaucoup plus nette et importante pour un cycle à 3 adsorbeurs. Ainsi, pour une dispersion de capacité ou de sélectivité approchant les valeurs limites précédentes, le profil de teneur du gaz de production est nettement plus déséquilibré en cycle à 3 adsorbeurs qu'en cycle à 2 adsorbeurs.

De manière fort surprenante, les performances du procédé VSA sont maintenues jusqu'à une hétérogénéité de propriétés d'adsorption de l'adsorbant pouvant atteindre des valeurs élevées. En d'autres termes, contrairement à l'enseignement de l'art antérieur, il est désormais possible d'utiliser dans un procédé PSA, en particulier VSA, un adsorbant hétérogène.

Or, un adsorbant hétérogène étant plus facile à produire, car moins contraignant, est moins cher qu'un adsorbant homogène classique.

De là, une unité PSA, par exemple une unité VSA pour la production d'oxygène, comprenant un ou plusieurs adsorbeurs remplit d'un adsorbant hétérogène conduit à une réduction notable du coût de production du gaz, en particulier de l'oxygène, par rapport à un procédé classique mettant en oeuvre un adsorbant homogène.

La présente invention n'est pas limitée au domaine de la production d'oxygène à partir d'air et peut donc, dès lors, être appliquée à la séparation d'autres flux gazeux, tels notamment à des flux contenant de l'hydrogène, du dioxyde de carbone et/ou du monoxyde de carbone, en particulier à la production de gaz de synthèse ou "syngaz".

## Revendications

1. Procédé PSA de séparation d'un flux gazeux contenant au moins un premier composé s'adsorbant préférentiellement sur au moins un adsorbant et au moins un deuxième composé s'adsorbant moins préférentiellement sur au moins ledit adsorbant que ledit premier composé,
   caractérisé en ce que l'adsorbant est un adsorbant hétérogène comportant des particules d'un produit adsorbant de type unique ayant une distribution de capacité d'adsorption de l'azote avec un rapport ($\sigma_c/\mu_c$) compris entre environ 0.02 et 0,10, et/ou ayant une distribution de sélectivité d'adsorption pour l'azote par rapport à l'oxygène avec un rapport ($\sigma_s/\mu_s$) compris entre environ 0.02 et 0,20, où le paramètre $\sigma_c$ désigne l'écart-type de la distribution de capacité d'adsorption et le paramètre $\mu_c$ la moyenne de ladite distribution, et le paramètre $\sigma_s$ désigne l'écart-type de la distribution de sélectivité d'adsorption et le paramètre $\mu_s$ la moyenne de ladite distribution.

2. Procédé selon la revendication 1, caractérisé en ce que le rapport ($\sigma_c/\mu_c$) est compris entre environ 0.02 et 0,08 et/ou en ce que le rapport ($\sigma_s/\mu_s$) est compris entre environ 0.02 et 0,18.

3. Procédé selon l'une des revendication 1 ou 2, caractérisé en ce que l'adsorbant est choisi parmi les zéolites échangées ou non-échangées.

4. Procédé selon l'une des revendication 1 à 3, caractérisé en ce que l'adsorbant est choisi parmi les zéolites de type X, Y, A, ZSM-3, ZSM-5, mordénite, faujasite ou clinoptilolite.

5. Procédé selon l'une des revendication 1 à 4, caractérisé en ce que l'adsorbant contient des cations choisis dans le groupe formé par les cations lithium, sodium, calcium, zinc, cuivre, aluminium, potassium, manganèse, strontium ou nickel et leurs mélanges.

**6.** Procédé selon l'une des revendication 1 à 5, caractérisé en ce que l'adsorbant contient au moins 50% de cations lithium et/ou au moins 10% de cations calcium et/ou au moins 5% de cations zinc, de préférence au moins 85 % de cations lithium ou au moins 80 % de cations calcium.

**7.** Procédé selon l'une des revendication 1 à 6, caractérisé en ce que l'adsorbant présente un rapport Si/Al de 1 à 1.25, de préférence de l'ordre de 1.

**8.** Procédé selon la revendication 1, caractérisé en ce que le flux gazeux à séparer comprend de l'oxygène et de l'azote, de préférénce le flux gazeux est de l'air.

**9.** Procédé selon la revendication 8, caractérisé en ce que le premier composé est l'azote et le deuxième composé est l'oxygène.

**10.** Procédé selon la revendication 8, caractérisé en ce qu'il est de type VSA.

**Claims**

**1.** PSA process for separating a gas stream containing at least one first compound which is preferentially adsorbed on at least one adsorbent and at least one second component which is adsorbed less preferentially on at least the said adsorbent then the said first component, characterized in that the adsorbent is a heterogeneous adsorbent comprising particles of an adsorbent substance of single type having a distribution in nitrogen adsorption capacity with a $(\sigma_c/\mu_c)$ ratio of between about 0.02 and 0.10 and/or having a distribution in adsorption selectivity for nitrogen with respect to oxygen with a $(\sigma_s/\mu_s)$ ratio of between about 0.02 and 0.20, in which the parameter $\sigma_c$ denotes the standard deviation of the distribution in adsorption capacity and the parameter $\mu_c$ denotes the mean of the said distribution, and the parameter $\sigma_s$ denotes the standard deviation of the distribution in adsorption selectivity and the parameter $\mu_s$ denotes the mean of the said distribution.

**2.** Process according to Claim 1, characterized in that the $(\sigma_c/\mu_c)$ ratio is between about 0.02 and 0.08 and/or in that the $(\sigma_s/\mu_s)$ ratio is between about 0.02 and 0.18.

**3.** Process according to either of Claims 1 and 2, characterized in that the adsorbent is chosen from exchanged or unexchanged zeolites.

**4.** Process according to one of Claims 1 to 3, characterized in that the adsorbent is chosen from zeolites of X, Y, A, ZSM-3, ZSM-5, mordenite, faujasite or clinoptilolite type.

**5.** Process according to one of Claims 1 to 4, characterized in that the adsorbent contains cations chosen from the group formed by lithium, sodium, calcium, zinc, copper, aluminium, potassium, manganese, strontium and nickel cations and mixtures thereof.

**6.** Process according to one of Claims 1 to 5, characterized in that the adsorbent contains at least 50% lithium cations and/or at least 10% calcium cations and/or at least 5% zinc cations, preferably at least 85% lithium cations or at least 80% calcium cations.

**7.** Process according to one of Claims 1 to 6, characterized in that the adsorbent has an Si/Al ratio of from 1 to 1.25, preferably of the order of 1.

**8.** Process according to Claim 1, characterized in that the gas stream to be separated comprises oxygen and nitrogen, preferably the gas stream is air.

**9.** Process according to Claim 8, characterized in that the first component is nitrogen and the second component is oxygen.

**10.** Process according to Claim 8, characterized in that it is of the VSA type.

**Patentansprüche**

1. Druckwechseladsorptionsverfahren zur Trennung eines Gasstroms, der mindestens eine erste Verbindung, die an mindestens einem Adsorptionsmittel bevorzugt adsorbiert wird, und mindestens eine zweite Verbindung, die an dem mindestens einen Adsorptionsmittel weniger bevorzugt adsorbiert wird als die erste Verbindung, enthält, dadurch gekennzeichnet, daß man als Adsorptionsmittel ein heterogenes Adsorptionsmittel einsetzt, das Teilchen aus einem einzigartigen adsorbierenden Produkt mit einer Verteilung des Stickstoffadsorptionsvermögens mit einem $(\sigma_c/\mu_c)$-Verhältnis zwischen etwa 0,02 und 0,10 und/oder einer Verteilung der Adsorptionsselektivität für Stickstoff im Verhältnis zu Sauerstoff mit einem $(\sigma_s/\mu_s)$-Verhältnis zwischen etwa 0,02 und 0,20 enthält, wobei der Parameter $\sigma_c$ die Standardabweichung der Verteilung des Adsorptionsvermögens und der Parameter $\mu_c$ den Mittelwert dieser Verteilung bezeichnet, und der Parameter $\sigma_s$ die Standardabweichung der Verteilung der Adsorptionsselektivität und der Parameter $\mu_s$ den Mittelwert dieser Verteilung bezeichnet.

2. Verfahren nach Anspruch 1, dadurch gekennzeichnet, daß das $(\sigma_c/\mu_c)$-Verhältnis zwischen etwa 0,02 und 0,08 und/oder das $(\sigma_s/\mu_s)$-Verhältnis zwischen etwa 0,02 und 0,18 liegt.

3. Verfahren nach Anspruch 1 oder 2, dadurch gekennzeichnet, daß man das Adsorptionsmittel unter ausgetauschten und nicht ausgetauschten Zeolithen auswählt.

4. Verfahren nach einem der Ansprüche 1 bis 3, dadurch gekennzeichnet, daß man das Adsorptionsmittel unter Zeolithen vom Typ X, Y, A, ZSM-3, ZSM-5, Mordenit, Faujasit oder Clinoptilolith auswählt.

5. Verfahren nach einem der Ansprüche 1 bis 4, dadurch gekennzeichnet, daß das Adsorptionsmittel Kationen aus der Gruppe bestehend aus Lithium-, Natrium-, Calcium-, Zink-, Kupfer-, Aluminium-, Kalium-, Mangan-, Strontium- und Nickelkationen und deren Gemischen enthält.

6. Verfahren nach einem der Ansprüche 1 bis 5, dadurch gekennzeichnet, daß das Adsorptionsmittel mindestens 50% Lithiumkationen und/oder mindestens 10% Calciumkationen und/oder mindestens 5% Zinkkationen und vorzugsweise mindestens 85% Lithiumkationen oder mindestens 80% Calciumkationen enthält.

7. Verfahren nach einem der Ansprüche 1 bis 6, dadurch gekennzeichnet, daß das Adsorptionsmittel ein Si/Al-Verhältnis von 1 bis 1,25, vorzugsweise von etwa 1, aufweist.

8. Verfahren nach Anspruch 1, dadurch gekennzeichnet, daß der zu trennende Gasstrom Sauerstoff und Stickstoff enthält und es sich vorzugsweise bei dem Gasstrom um Luft handelt.

9. Verfahren nach Anspruch 8, dadurch gekennzeichnet, daß es sich bei der ersten Verbindung um Stickstoff und bei der zweiten Verbindung um Sauerstoff handelt.

10. Verfahren nach Anspruch 8, dadurch gekennzeichnet, daß es sich um ein Vakuumwechseladsorptionsverfahren handelt.

FIG. 1

FIG. 2

FIG. 3

FIG. 4